# EUROPEAN PATENT APPLICATION

(11) **EP 4 474 137 A1**
(43) Date of publication of application: **11.12.2024**
(21) Application number: 24178324.0
(22) Date of filing: 27.05.2024
(51) Int. Cl.: B29C 64/268, B29C 64/282, B33Y 30/00, B22F 10/36, B22F 12/44, B22F 12/45, B22F 12/47, B22F 12/49

(54) **SYSTEMS AND METHODS FOR ADDITIVELY MANUFACTURING THREE-DIMENSIONAL OBJECTS WITH ARRAY OF LASER DIODES**

(30) Priority: 09.06.2023 US 202363472049 P
(71) Applicant: General Electric Company, Schenectady, NY 12345 (US)
(72) Inventor: THOMPSON, Brian Thomas, Schenectady, NY 12345 (US); SIMMERMON, David Scott, Schenectady, NY 12345 (US); STEELE, William Joseph, Schenectady, NY 12345 (US)
(74) Representative: Hafner & Kohl PartmbB

(57) **Abstract**

A system (10) for additively manufacturing a three-dimensional object is provided. The system (10) includes a build platform (112), an array of laser diodes (200), each laser diode (210) of the array of laser diodes (200) configured to direct a laser beam (220) toward the build platform (112), and a controller (102) communicatively coupled to each laser diode (210) of the array of laser diodes (200) such that control signals are communicated from the controller (102) to each laser diode (210) individually.

## Description

### CROSS-REFERENCE TO RELATED APPLICATION

The present specification claims the benefit of U.S. Provisional Patent Application Serial No. 63/472,049 filed June 9, 2023 and entitled "Systems and Methods for Additively Manufacturing Three-Dimensional Objects with Array of Laser Diodes," the entirety of which is incorporated by reference herein.

### TECHNICAL FIELD

The present disclosure generally pertains to systems and methods for generating a laser beam to additively manufacture three-dimensional objects, such as devices used in powder bed fusion processes.

### BACKGROUND

Additive manufacturing systems may be utilized to build an object from build material, such as powders, in a layer-wise manner. Three dimensional objects may be additively manufactured using a powder bed fusion process in which a laser beam is directed onto a powder bed (e.g., a build platform) to melt and/or sinter sequential layers of powder material. The properties of the three dimensional object formed by melting and/or fusing the powder material may depend at least in part on one or more characteristics of the energy beam provided by a system for generating a laser beam. Accordingly, it would be welcomed in the art to provide improved additive manufacturing systems and methods, including improved energy beam systems and/or methods that may increase build speed leading to lower per part build cost.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a system for additively manufacturing a three-dimensional object, according to one or more embodiments shown and described herein;
FIG. 2A schematically depicts an array of laser diodes of the system of FIG. 1 irradiating a layer of powder on a build platform, according to one or more embodiments shown and described herein;
FIG. 2B schematically depicts an exemplary laser diode array, according to one or more embodiments shown and described herein;
FIG. 3A schematically depicts an exemplary laser diode array with staggered rows of laser diodes, according to one or more embodiments shown and described herein;
FIG. 3B schematically depicts an exemplary laser diode array with staggered columns of laser diodes, according to one or more embodiments shown and described herein;
FIG. 3C schematically depicts another exemplary laser diode array, according to one or more embodiments shown and described herein;
FIG. 4A schematically depicts the system of FIG. 1 selectively manipulating a laser beam generated by each laser diode of an array of laser diodes, according to one or more embodiments shown and described herein;
FIG. 4B schematically depicts the system of FIG. 1 including an optical element disposed between an array of laser diodes and a build platform, according to one or more embodiments shown and described herein;
FIG. 4C schematically depicts the system of FIG. 1 including a plurality of optical element disposed between an array of laser diodes and a build platform, according to one or more embodiments shown and described herein;
FIG. 5 schematically depicts the system of FIG. 1 with an array of laser diodes that is movable, according to one or more embodiments shown and described herein; and
FIG. 6 schematically depicts a method for additively manufacturing a three-dimensional object, according to one or more embodiments shown and described herein.

### DETAILED DESCRIPTION

Embodiments described herein are directed to systems and methods for additively manufacturing a three dimensional object. The system includes an array of laser diodes including laser diodes each directing a laser beam to a build platform to melt or fuse powder material disposed on the build platform. Each laser diode is individually controlled to emit laser energy on command in any sequence as demanded by a controller to manipulate (e.g., steer) the laser beam, which may provide precise control of microstructure formation and thus resulting material properties. Various embodiments of systems and methods for additively manufacturing a three dimensional object are described in more detail herein. Whenever possible, the same reference numerals will be used throughout the drawings to refer to the same or like parts.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

As described herein, the presently disclosed subject matter involves the use of systems, devices, or methods for additively manufacture three-dimensional objects. As used herein, the term "additive manufacturing" refers generally to manufacturing technology in which components are manufactured in a piece-by-piece or layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMI,S) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, Vat Polymerization (VP) technology, Stereolithography (SLA) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, or layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, concrete, or any other suitable material that may be in solid, liquid, powder, sheet material, wire, or any other suitable form, or combinations thereof. Exemplary materials may include metals, polymers, or ceramics, as well as combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors.

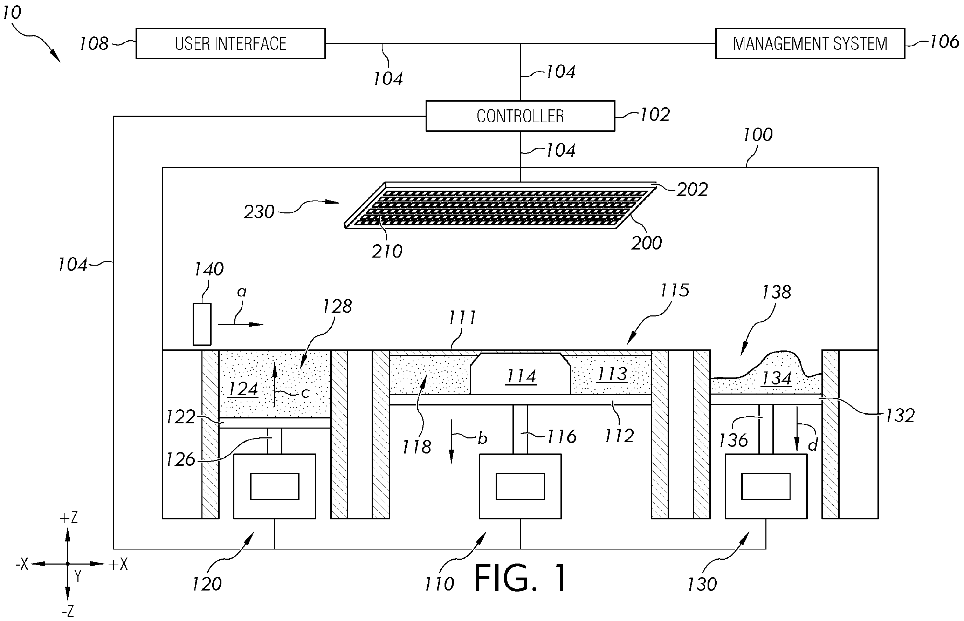

As used herein, the term "build plane" refers to a plane defined by a surface upon which an energy beam impinges during an additive manufacturing process. For example, a build plane 111 is shown in FIG. 1. Generally, the surface of a powder bed (e.g., a powder bed 115 of FIG. 1) defines the build plane. During irradiation of a respective layer of the powder bed, a previously irradiated portion of the respective layer may define a portion of the build plane, and/or prior to distributing powder material across a build module (e.g., a build module 110 of FIG. 1), a build plate (e.g., a build platform 112 of FIG. 1) that supports the powder bed generally defines the build plane.

It is understood that the terms "first", "second", and "third" may be used interchangeably to distinguish one component from another and are not intended to signify location or importance of the individual components. The terms "a" and "an" do not denote a limitation of quantity, but rather denote the presence of at least one of the referenced item.

Referring to FIG. 1, a system 10 for additively manufacturing a three-dimensional object is depicted. The system 10 includes a build platform 112, an array of laser diodes 200, and a controller 102. The system 10 may include a device 100 (e.g., a three dimensional printer, an additive manufacturing machine, or the like) including various components for additively manufacturing a three-dimensional object. The device 100 may include a build module 110, a powder module 120, and/or an overflow module 130. The build module 110, the powder module 120, and/or the overflow module 130 may be provided in the form of modular containers configured to be installed into and removed from the device 100 such as in an assembly-line process. Additionally, or in the alternative, the build module 110, the powder module 120, and/or the overflow module 130 may define a fixed componentry of the device 100.

The build module 110 may include a build chamber 118 within which an object or objects 114 may be additively manufactured, the build platform 112 supporting one or more layers of powder material 113 distributed across on the build platform 112, and a build piston 116 lowers the build platform 112 in a direction b (e.g., -Z direction of the coordinate axes of FIG. 1) to make room for the powder material 113. A fresh layer or a top layer (e.g., a build plane 111) of the powder material 113 may be sequentially created in a layer by layer manner to a powder bed 115 by the powder module 120 and selectively melted or fused by the array of laser diodes 200 to additively manufacture the object 114.

The powder module 120 may contain a supply of powder material 124 housed within a supply chamber 128. The powder module 120 includes a powder piston 126 that actuates a powder supply floor 122. The powder piston 126 may elevate the powder supply floor 122 in a direction c (e.g., +Z direction of the coordinate axes of FIG. 1) during operation of the device 100. As the powder supply floor 122 elevates, a portion of the powder material 124 is forced out of the powder module 120. A recoater 140 such as a blade or roller sequentially distributes thin layers of powder material 124 across the build plane 111 above the build module 110. The recoater 140 may be moved in a direction a (e.g., +X direction of the coordinate axes of FIG. 1) to distribute the powder material 124 on to the build platform 112.

The overflow module 130 may capture excess powder material 134 in an overflow chamber 138. The excess powder material 134 may be an overflow (e.g., a left over) from creating the thin layers of powder material 124 across the build plane 111 above the build platform 112. The overflow module 130 may include an overflow piston 136 that gradually lowers a powder floor 132 in a direction d (e.g., -Z direction of the coordinate axes of FIG. 1) to make a room within the overflow chamber 138 for additional excess powder material 134.

It will be appreciated that the device 100 may not utilize the powder module 120 and/or the overflow module 130, and that other systems may be provided for handling the powder material 124, including different powder supply systems and/or excess powder recapture systems. The subject matter of the present disclosure may be practiced with any suitable additive manufacturing machine without departing from the scope hereof.

The controller 102 is communicatively coupled to each laser diode 210 of the array of laser diodes 200 such that control signals are communicated from the controller 102 to each laser diode 210 individually. The controller 102 may be included as part of the device 100 or the controller 102 may be associated with the device 100. The controller 102 may be provided as a part of the device 100 and/or provided separately from the device 100. Various components of the controller 102 may be communicatively coupled to various componentry of the device 100. The controller 102 may be communicatively coupled with a management system 106 and/or a user interface 108. The management system 106 may be configured to interact with the controller 102 to operate the system 10. Operations of the management system 106 may include transmitting data from the management system 106 to the controller 102 and/or transmitting data from the controller 102 to the management system 106. The user interface 108 may include one or more user input/output devices to allow a user to interact with the system 10.

The controller 102 may include one or more processors that may be any device capable of executing machine-readable and executable instructions. Accordingly, each of the one or more processors of the controller 102 may be an integrated circuit, a microchip, or any other computing device. The processor may be coupled to a communication path 104 that provides signal connectivity between the various components of the system 10 including the device 100, the management system 106, and/or the user interface 108. Accordingly, the communication path 104 may communicatively couple any number of components of the system 10 with one another and allow them to operate in a distributed computing environment. As used herein, the phrase "communicatively coupled" means that coupled components are capable of exchanging data signals with one another such as, e.g., electrical signals via a conductive medium, electromagnetic signals via air, optical signals via optical waveguides, and the like.

A laser beam system 230 may include the array of laser diodes 200 including a plurality of laser diodes 210. For example, the plurality of laser diodes 210 may utilize any singular or multiplicity of wavelengths (e.g., a plurality of wavelengths). The array of laser diodes 200 may be coupled to a laser diodes array housing 202. Each laser diodes 210 of the array of laser diodes 200 is configured to direct a laser beam toward the build platform 112. The laser beam may selectively solidify a respective portion of the build plane 111. As the laser beam selectively melts or fuses sequential layers of the powder material 113, the object 114 is formed in a three dimensional shape. The plurality of laser diodes 210 may be respectively configured to emit a laser beam. For example, the plurality of laser diodes 210 may include double heterostructure laser diodes, quantum well laser diodes, separate confinement heterostructure laser diodes, separate confinement heterostructure quantum well laser diodes, distributed Bragg reflector laser diodes, distributed feedback laser diodes, vertical cavity surface-emitting laser diodes (VCSELs), vertical external cavity surface-emitting laser diodes (VECSELs), Bragg reflector laser diodes, or the like.

Typically, with a DMI,M, EBM, or SLM system, the powder material 113 is fully melted, with respective layers being melted or re-melted with respective passes of the energy beams. With DMLS or SLS systems, typically the layers of powder material 113 are sintered, fusing particles of powder material 113 to one another generally without reaching the melting point of the powder material. The laser beam system 230 may be componentry integrated as a part of the device 100 and/or componentry provided separately from device 100.

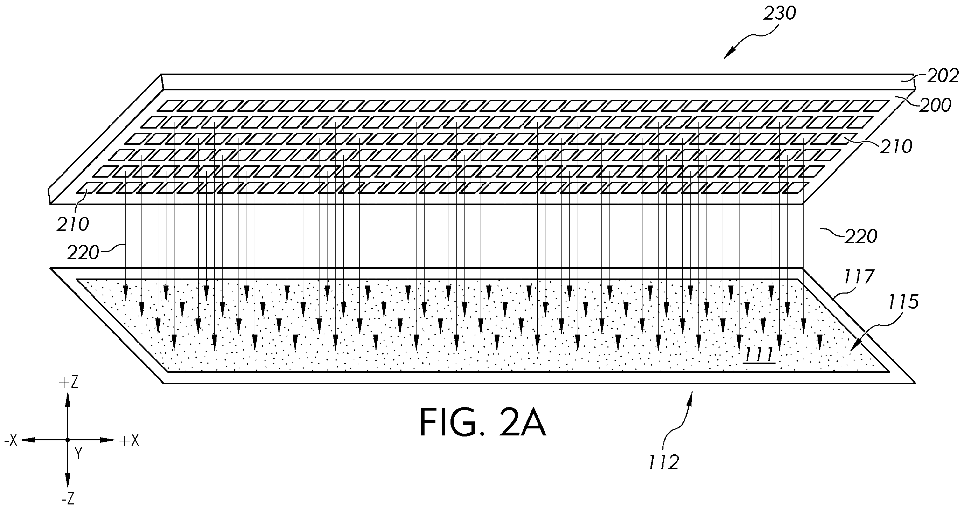

Referring to FIG. 2A, each laser diode 210 of the array of laser diodes 200 is configured to direct a laser beam 220 toward the build platform 112. Each laser diode 210 may direct the laser beam 220 toward the build plane 111 of the powder bed 115 supported by the build platform 112. In embodiments, the array of laser diodes 200 may be sized to cover the entire build plane 111. The array of laser diodes 200 may include enough number of laser diodes 210 to direct the laser beams 220 to the entire surface area of the build plane 111. The laser diodes 210 may be aligned to direct the laser beams 220 to the entire surface area of the build plane 111. The laser beams 220 may be of any wavelength (e.g. UV, visible, infrared, and the like). In embodiments, the array of laser diodes 200 may be fixed in position with respect to the build platform 112. In embodiments, the laser diodes 210 may be selectively operated such that to direct the laser beams 220 to selected spot on the build plane 111. For example, each of the laser diodes 210 is individually operated to direct a respective laser beam 220 to a respective spot or area on the build plane 111 to melt or fuse the powder material 113 of the build plane 111 to achieve a desired shape of an object to be built. It is noted that some duplicating element numbers (e.g., the laser diodes 210 and the laser beams 220) in FIG. 2A are omitted for clarity.

Still referring to FIG. 2A, the laser projection boundary 117 bounds a larger area than the build plane 111 and the powder bed 115. That is, the laser projection boundary 117 covers an area that is greater than the entire area of the build plane 111 and the powder bed 115 so that all areas of the build plane 111 and powder bed 115 can be reached by a laser emitted from each of the plurality of laser diodes 210. As a result, the array of laser diodes described herein have an ability to form objects on the build plane 111 more quickly, efficiently, and accurately relative to conventional build chambers that utilize one or two lasers optically coupled with scanning devices to form objects.

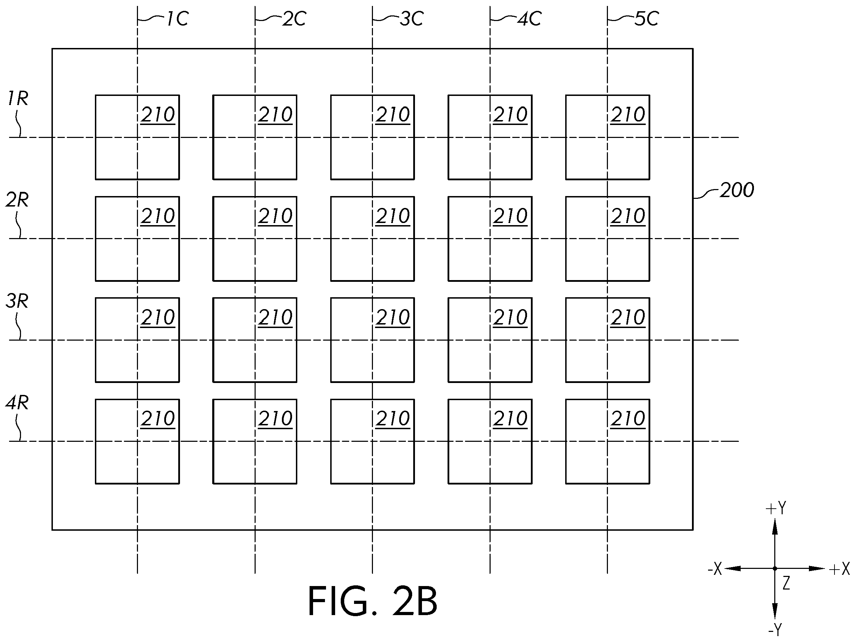

Referring to FIG. 2B, an exemplary pattern of the array of laser diodes 200 is depicted. The laser diodes 210 may be arranged in a layered two dimensional pattern. For example, the laser diodes 210 are arranged in a plurality of rows (e.g., rows 1R, 2R, 3R, and 4R) in a first direction (e.g., in +/-X direction of the coordinate axes of FIG. 2A) and arranged in in a plurality of columns (e.g., columns 1C, 2C, 3C, 4C, and 5C) in a second direction (e.g., +/-Y direction of the coordinate axes of FIG. 2A) perpendicular to the first direction. The rows 1R-4R may be evenly spaced from each other. Each of the laser diodes 210 may be spaced from the neighboring laser diodes within the respective row such that the laser diodes 210 are spaced at a row pitch within the plurality of rows (e.g., rows 1R-4R). The columns 1C-5C may be spaced evenly from each other. The space between the rows 1R-4R may be the same as the space between the columns 1C-5C. Each of the laser diodes 210 may be spaced from the neighboring laser diodes within the respective column, such that the laser diodes 210 are spaced at a column pitch within the plurality of columns (e.g. columns 1C-5C). In embodiments, the plurality of laser diodes 210 may be distributed in an area larger than a build surface of the build platform. For example, a laser projection boundary 117 shows the area that the laser diodes 210 may emit laser beams thereon.

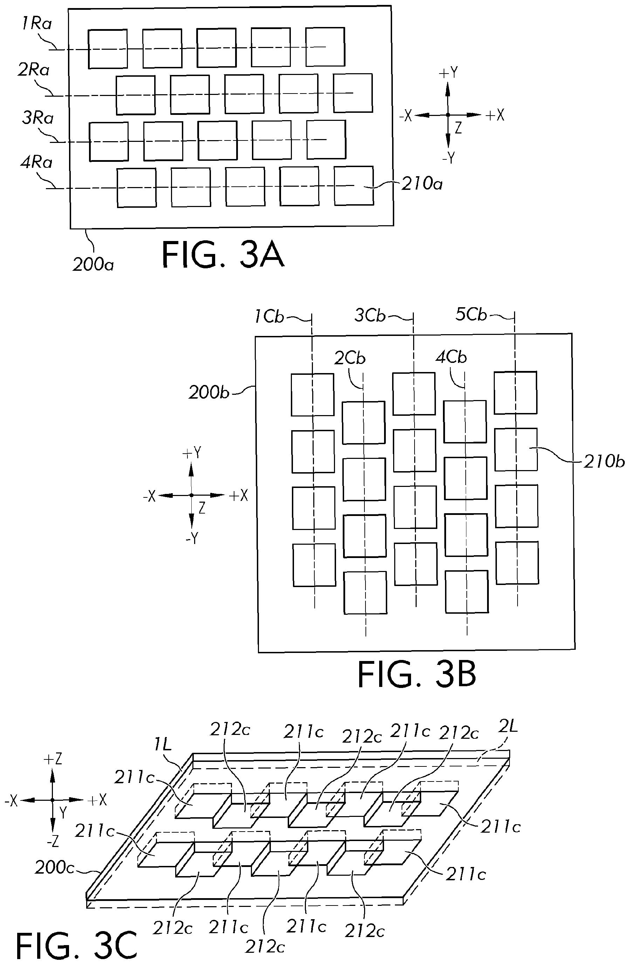

Referring to FIG. 3A-3C, exemplary patterns of the array of laser diodes 200a-200c are depicted. FIGS. 3A and 3B depicts examples of the laser diodes 210a and 210b, respectively, arranged in the layered two dimensional pattern. In FIG. 3A, the array of laser diodes 200a includes the laser diodes 210a arranged in a plurality of rows 1Ra-4Ra. Neighboring rows (e.g., the rows 1Ra and 2Ra, 2Ra and 3Ra, and 3Ra and 4Ra) of the plurality of rows 1Ra-4Ra are staggered in the first direction. (e.g., in +/-X direction of the coordinate axes of FIG. 3A). The neighboring rows may be shifted in opposite directions with respect to each other. For example, the rows 1Ra and 3Ra are shifted in -X direction of the coordinate axes of FIG. 3A with respect to the rows 2Ra and 4Ra.

Referring to FIG. 3B, the array of laser diodes 200b includes the laser diodes 210b arranged in a plurality of columns 1Cb-5Cb. Neighboring columns (e.g., the columns 1Cb and 2Cb, 2Cb and 3Cb, 3Cb and 4Cb, and 4Cb and SCb) of the plurality of columns 1Cb-4Cb are staggered in the second direction. (e.g., in +/-Y direction of the coordinate axes of FIG. 3B). The neighboring columns may be shifted in opposite directions with respect to each other. For example, the columns 1Cb, 3Cb, and 5Cb are shifted in +Y direction of the coordinate axes of FIG. 3B with respect to the columns 2Cb and 4Cb.

Referring to FIG. 3C, the array of laser diodes 200c includes the laser diodes (e.g., laser diodes 211c, 212c) arranged in a plurality of layers (e.g., layers 1L, 2L) in a third direction (e.g., in +/-Z direction of the coordinate axes of FIG. 3C) perpendicular to both of the first and second directions (e.g., in +/-X and +/-Y directions of the coordinate axes of FIG. 3C). The plurality of laser diodes 211c, 212c may be arranged in a three dimensional pattern. For example, the layer 1L includes a plurality of laser diodes 211c, and the layer 2L includes a plurality of laser diodes 212c. Neighboring layers (e.g., the layer 1L and the layer 2L) may be layered adjacent to each other, and the laser diodes 211c and the laser diodes 212c may be staggered in the third direction. The laser diodes 211c and the laser diodes 212c may not overlap each other in the third direction (e.g., in +/-Z direction of the coordinate axes of FIG. 3C). In embodiments, the layer 1L may have the laser diodes 211c arranged in a two dimensional pattern, and the layer 2L may have the laser diodes 212c arranged in a two dimensional pattern.

It should be noted that the exemplary patterns of the array of laser diodes 200a-200c depicted in FIG. 3A-3C are patterns that may be applied to align more or less laser diodes than the number of the laser diodes depicted in FIG. 3A-3C. The exemplary patterns of the array of laser diodes 200a-200c may be applied to align all of the laser diodes of the array. The staggered arrangement of the array of laser diodes 200a-200c depicted in FIG. 3A-3C may enable a finer resolution of laser energy to be applied to the build plane 111.

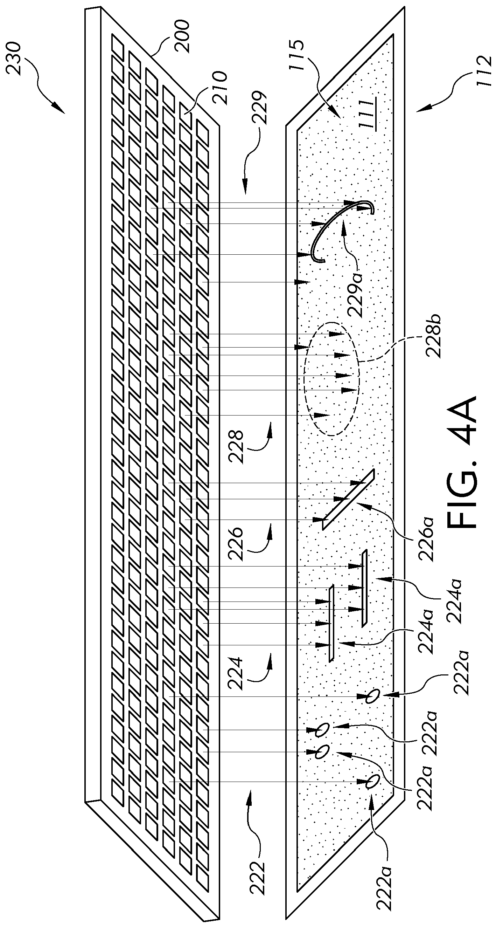

Referring to FIG. 4A, the controller 102 (shown in FIG. 1) may selectively manipulates each laser diode 210 to emit, individually or in sequence, the laser beam from each laser diode 210. In embodiments, the controller 102 may selectively emit the laser beam to melt or fuse the powder material of the build plane 111 of the powder bed 115 in a certain shape or the like to precisely control the thermal cycle of a voxel of powder to enable microstructure formation. For example, each laser beam of a group of laser beams 222 may create a dot shaped or a circular melt pool 222a, which is sized to have a diameter that may be formed from a laser beam of a single laser diode 210. The laser beams 222 may irradiate the build plane 111 at the same time, sequentially, or staged at different times or areas of the build plane 111. For another example, each laser beam of a group of laser beams 224 may create a plurality of line shaped melt pools 224a. The laser beams 224 may irradiate the build plane 111 at the same time to create the line shaped melt pools 224a simultaneously, sequentially, or staged at different times or areas of the build plane 111. Each laser beam of a group of laser beams 226 may create a line shaped melt pool 226a in any directions that the laser diodes 210 may be aligned, including off angle lines (e.g., diagonals). The entire line shaped melt pool 226a may be created at the same time, staggered along the length, or sequentially from one end to another end. Also, a group of laser beams 228 may irradiate to heat the build plane 111 at an area 228b around the primary consolidation path for preheating, post heating, or in-situ thermal control of the powder bed 115. Power of each laser beam of the group of laser beams 228 may be individually controlled to irradiate the area 228b to create a thermal profile, which may reduce thermal stress in the powder bed 115 or may help achieve tailored microstructures. Each of a group of laser beams 229 may create a curve shaped melt pool 229a. The curve shaped melt pool 229a may be created at the same time, staggered along the arc length, or sequentially from one end to another end. Selective control of the individual laser beam may provide proper heat input balance, melt pool sustainment, and tight control on resulting microstructural formation, which may provide control over mechanical properties (e.g., strength, ductility, hardness, impact resistance, fracture toughness, or the like), surface features such as roughness, and structure design of the object to be manufactured.

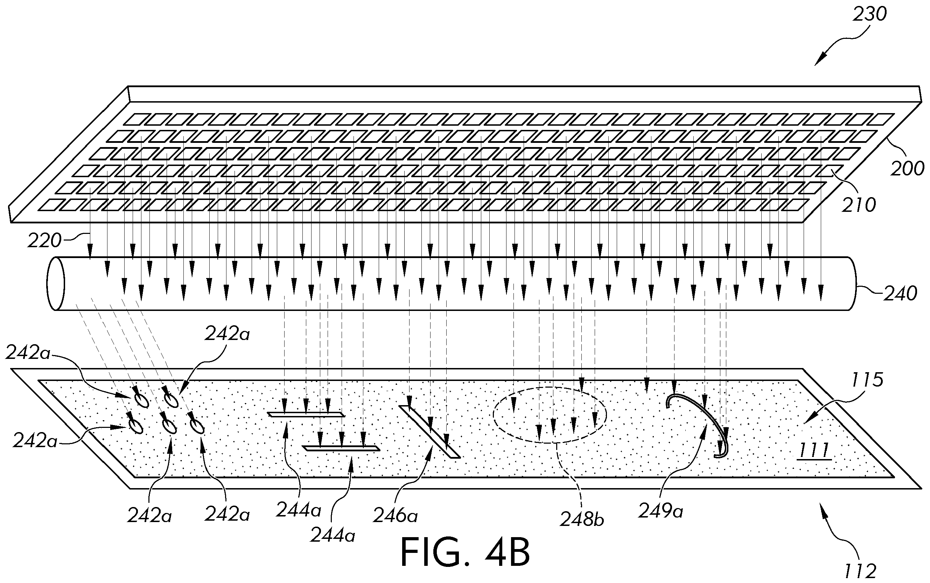

Referring to FIG. 4B, the laser beam system 230 may include an optical element 240 disposed between the build platform 112 and the array of laser diodes 200. In embodiments, the optical element 240 may include one or more optical elements. The controller 102 may selectively manipulate each laser diode 210 to emit, steer, collapse, or combine each of the laser beam 220 or the laser beams 220 by utilizing the optical element 240. The optical element 240 may manipulate the laser beams 220 to change an angle of the laser beams 220 to irradiate the build plane 111. The laser beams 220 may be focused or collapsed to be angled with respect to the build plane 111. The laser beams 220 that are angled may create one or more melt pools 244b in various shapes depending on the incidence angle of the laser beams 220. For example, the melt pools 244b may have shape close to a dot or circular shape when the incidence angle is close to 0°. Also, the shape of the melt pools 244b may changes toward an oval shape as the incidence angle increases. The laser beams 220 may be focused or collapsed by the optical element 240 into a line to create one or more line shaped melt pools 244a of any angle. For example, the laser beams 220 may be focused or collapsed by the optical element 240 into a line to create a line shaped melt pool 246a perpendicular, or at any angle with respect to the line shaped melt pools 244a. The optical element 240 may be used to manipulate and/or focus laser beams 220 (e.g., laser emissions) from select diodes with the same or reduced power as dictated by the controller 102 to heat instead of fuse or melt an area 248b surrounding or in advance of or tailing the primary consolidation path for preheating, post heating, or otherwise thermal control of the powder bed 115. The optical element 240 may manipulate the laser beams 220 to create a curve shaped melt pool 249a. In embodiments, the controller 102 controls the optical element 240 to rotate to manipulate the laser beams 220 to a desired location on the build plane 111 to support consolidation. The optical element 240 may manipulate the beam to the desired location on the powder bed 115 to support consolidation, and thus provide control over mechanical properties (e.g., strength, ductility, hardness, impact resistance, fracture toughness, or the like), surface features such as roughness, and structure design of the object to be manufactured.

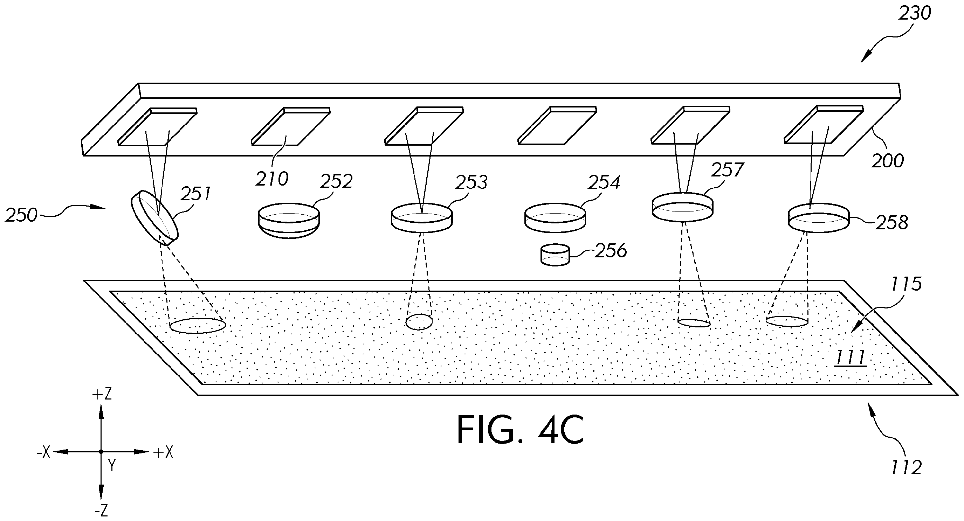

Referring to FIG. 4C, an optical element 250 may include a plurality of optical elements 251, 252, 253, 254, 256, 257, 258 disposed between the build platform 112 and the array of laser diodes 200, at any distance close to or away from the diodes, and configured to address the emissions of each laser diode 210 or combination of the laser diodes 210. Each of the plurality of optical elements may be a mirror, lens, or other optical device configured to manipulate, defocus, or concentrate the respective laser beam 220 or the plurality of laser beams 220. The optical elements 251, 252, 253, 254, 256, 257, 258 are configured to direct the laser beams 220 onto the build plane 111. For example, the controller 102 may selectively control each of the optical element 251, 252, 253, 254, 256, 257, 258 to change a physical position in space (e.g., movements in +/-X, +/-Y, +/-Z directions of the coordinate axes in FIG. 4C) or a shape or morphology of the respective optical element 251, 252, 253, 254, 256, 257, 258. An angle of the optical element 251 may be changed to manipulate a respective laser beam, a shape of the optical element 252 may be changed to have a convex shape or any other shapes, and a shape of the optical element 253 may change a focus of a respective laser beam. Two optical elements 254, 256 may be used to manipulate, focus, or defocus a respective laser beam. One of the optical element 256 may be a window, such as a protective glass that protects one or more components (e.g., the optical element 254) of the laser beam system 230 from contaminants, such as fumes and soot from irradiating the powder material. The optical element 257 may be moved up and down (e.g., in +/-Z direction of the coordinate axes in FIG. 4C) and the optical element 258 may be moved sideways (e.g., in +/-X and/or +/-Y directions of the coordinate axes in FIG. 4C). The individual control of the optical elements 251, 252, 253, 254, 256, 257, 258 may provide concentration of the individual or collective light energy coming from the laser diodes 210 so as to make the most efficient use of the laser energy being emitted to generate the desired geometric shape, microstructure, and physical properties. The individual control of the optical elements 251, 252, 253, 254, 256, 257, 258 may provide concentration of the individual or collective light energy coming from the laser diodes 210 so as to generate desired melt pool formation and/or heating characteristics. In particular, the optical elements 251, 252, 253, 254, 256, 257 may be controlled individually for simultaneous, continuous, and/or alternative melt pool formation. The individual control of the optical elements 251, 252, 253, 254, 256, 257, 258 may ensure desired thermal profiles to reduce thermal stresses in the build and/or achieve tailored microstructures.

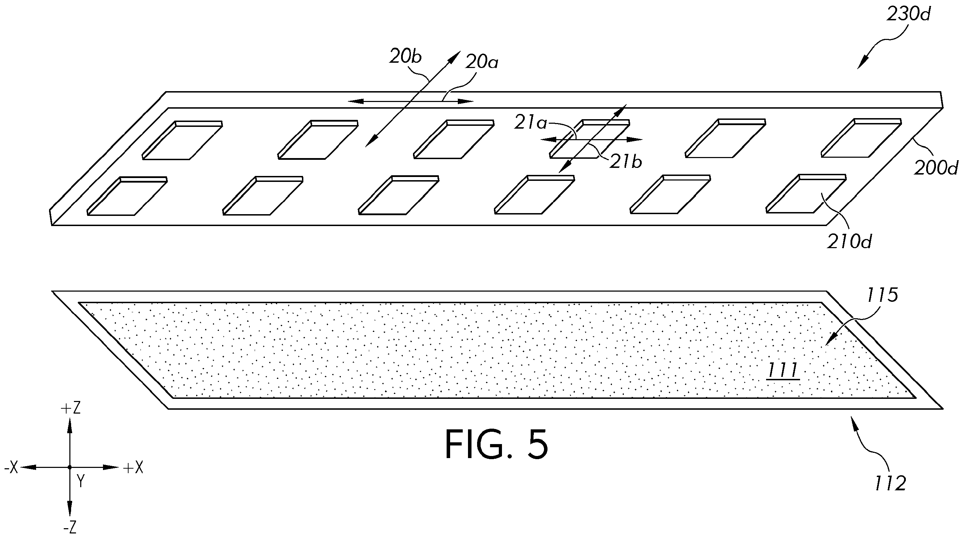

Referring to FIG. 5, a laser beam system 230d may include an array of laser diodes 200d that may be movable in a first direction 20a (e.g., in +/-X direction of the coordinate axes in FIG. 5) and/or a second direction 20b (e.g., in +/-Y direction of the coordinate axes in FIG. 5) perpendicular to the first direction 20a. Instead of the array of laser diodes 200d or in addition to the array of laser diodes 200d, each of laser diodes 210d may be movable in a first direction 21a (e.g., in +/-X direction of the coordinate axes in FIG. 5) and/or in a second direction 21b (e.g., in +/-Y direction of the coordinate axes in FIG. 5) perpendicular to the first direction 21a. In embodiments, the build plane 111 of the build platform 112 may remain stationary (e.g., the build plane 111 of the build platform 112 does not move in +/-X direction and +/-Y direction of the coordinate axes in FIG. 5) while the array of laser diodes 200d and/or the laser diodes 210d are moved to irradiate the build plane 111. The moveable array of laser diodes 200d or individual diodes 210d may be used in conjunction with or separate from the manipulable optical devices (e.g., the optical element 240, the optical element 250, or the like) described previously. The individual movements of the array of laser diodes 200d, the laser diodes 210d, and/or the optical elements (e.g., the optical element 240, the optical element 250, or the like) in at least one of in +/-X, +/-Y directions of the coordinate axes in FIG. 5 may provide lasing of any gaps present on the powder bed 115 which may result from the pitch of the laser diodes 210 of the array of laser diodes 200.

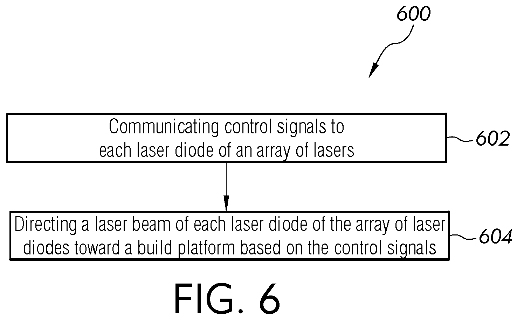

Referring to FIG. 6, a flow chart of a method 600 for additively manufacturing a three-dimensional object that is performed by the system 10 of FIG. 1 is depicted. At step 602, control signals are communicated to each laser diode (e.g., the laser diode 210) of an array of laser diodes (e.g., the array of laser diodes 200). For example, each laser diode may receive a respective control signal. The respective control signal may be specific to each laser diodes. The control signals may be communicated from a controller (e.g., the controller 102). In embodiments, the control signals may include signals to turn on and off each laser diode and/or increase or decrease a power level of each laser diode. In embodiments, the control signals may include signals to control one or more optical elements (e.g., the optical elements 240, 251, 252, 253, 254, 256, 257, 258 in FIGS. 4B and 4C). For example, the control signals may change an angle, morphology, and/or position of the one or more optical elements. In embodiments, the control signals may include signals to control a position of the array of laser diodes (e.g., the array of laser diodes 200d in FIG. 5) and/or each laser diode (e.g., the laser diodes 210d in FIG. 5). For example, as depicted in FIG. 5, the control signals may move the position of the array of laser diodes 200d in the first direction 20a and/or in the second direction 20b. The control signals may cause each laser diode 210d to move in the first direction 21a and/or the second direction 21b.

Still referring to FIG. 6, at step 604, a laser beam of each laser diode of the array of laser diodes is directed toward a build platform based on the control signals. For example, the laser beam (e.g., the laser beam 220 in FIG. 2A) is directed toward the build platform (e.g., the build platform 112) based on the control signals. The laser beam may be directed to irradiate the powder material on the build platform based on the control signals to achieve the design of the object to be manufactured. As a result, the laser beam will be controlled based on the control signals to irradiate the powder material in a specific manner.

In embodiments, at step 604, the array of laser diodes or each laser diode may be moved in a first direction and a second direction perpendicular to the first direction based on the control signals. As previously described with reference to FIG. 5, the control signals may move the array of laser diodes 200d in the first direction 20a and/or in the second direction 20b. The control signals may move each laser diode 210d in the first direction 21a and/or the second direction 21b.

In embodiments, at step 604, the laser beam of each laser diode may be selectively manipulated based on the control signals. The laser beam of each laser diode may be selectively manipulated by directly controlling each laser diode. For example, each laser diode may be controlled to change the position of each laser diode, strength of the laser beam of each laser diode, or the like. The laser beam of each laser diode may be selectively manipulated by controlling the one or more optical elements. For example, each optical element may be angled or the position or morphology of each optical element may be changed to manipulate the laser beam of each laser diode.

It should be now understood that the embodiments described herein are directed to systems and methods for additively manufacturing a three-dimensional object. The system includes an array of laser diodes including laser diodes each directing a laser beam to a build platform to melt or fuse powder material disposed on the build platform. Each laser diode is individually controlled to emit the laser beam of a specific power generated from each laser diode, which is then manipulated via optional optical elements or devices. The individually controlled laser beam may provide precise control of microstructure formation and thus resulting material properties. As a result, the array of laser diodes described herein may have an ability to form objects on the build plane more quickly, efficiently, and accurately relative to conventional build chambers that utilize one or two lasers optically coupled to scanning devices to form objects. Moreover, selective control or manipulation of the individual laser beam may provide proper heat input balance and tight control on resulting microstructural formation, which may provide control over physical and mechanical properties (e.g., strength, ductility, hardness, impact resistance, fracture toughness, or the like), surface features such as roughness, and structure design of the object to be manufactured.

Further aspects of the embodiments described herein are provided by the subject matter of the following clauses:
A system for additively manufacturing a three-dimensional object, the system comprising: a build platform; an array of laser diodes, each laser diode of the array of laser diodes configured to direct a laser beam toward the build platform; and a controller communicatively coupled to each laser diode of the array of laser diodes such that control signals are communicated from the controller to each laser diode individually.

The system of any preceding clause, wherein the array of laser diodes are arranged in a plurality of rows in a first direction and arranged in a plurality of columns in a second direction perpendicular to the first direction, each laser diode spaced from each neighboring laser diode.

The system of any preceding clause, wherein neighboring rows of the plurality of rows are staggered in the first direction.

The system of any preceding clause, wherein neighboring columns of the plurality of columns are staggered in the second direction.

The system of any preceding clause, wherein the array of laser diodes is arranged in a plurality of layers in a third direction perpendicular to both of the first and second directions.

The system of any preceding clause, wherein the controller selectively manipulates the laser beam of each laser diode.

The system of any preceding clause, further comprising an optical element disposed between the build platform and the array of laser diodes, wherein the controller selectively manipulates the laser beam of each laser diode by utilizing the optical element.

The system of any preceding clause, further comprising an optical element disposed between the build platform and the array of laser diodes, wherein the optical element includes a plurality of optical elements, each of the plurality of optical elements is configured to manipulate the respective laser beam.

The system of any preceding clause, wherein the array of laser diodes is movable in a first direction or a second direction perpendicular to the first direction.

The system of any preceding clause, wherein each laser diode of the array of laser diodes is movable in a first direction or a second direction perpendicular to the first direction.

The system of any preceding clause, wherein the array of laser diodes is distributed in an area larger than a build surface of the build platform.

The system of any preceding clause, wherein the laser diodes are arranged in a layered two dimensional pattern.

The system of any preceding clause, wherein the laser diodes are arranged in a plurality of layers in a three dimensional pattern.

The system of any preceding clause, wherein the controller selectively manipulates the laser beam of each laser diode.

The system of any preceding clause, further comprising an optical element disposed between the build platform and the array of laser diodes, wherein the controller selectively manipulates the laser beam of each laser diode by utilizing the optical element.

The system of any preceding clause, further comprising an optical element disposed between the build platform and the array of laser diodes, wherein the optical element includes a plurality of optical elements, each of the plurality of optical elements is configured to manipulate the respective laser beam.

The system of any preceding clause, wherein the array of laser diodes includes another layer of a plurality of laser diodes arranged in a two-dimensional pattern.

A method for additively manufacturing a three-dimensional object, the method comprising communicating control signals to each laser diode of an array of laser diodes individually; and directing a laser beam of each laser diode of the array of laser diodes toward a build platform based on the control signals.

The method of any preceding clause, further comprising moving the array of laser diodes or each laser diode in a first direction and a second direction perpendicular to the first direction based on the control signals.

The method of any preceding clause, further comprising selectively manipulating the laser beam of each laser diode based on the control signals.

A controller comprising a processor and a non-transitory memory storing computer code which, when executed by the processor, causes the processor to: communicate control signals to each laser diode of an array of laser diodes individually, the control signals causing a laser diode of the array of laser diodes to direct a laser beam toward a build platform.

The controller of any preceding clause wherein the control signals further cause the array of laser diodes or each laser diode to move in a first direction and a second direction perpendicular to the first direction based on the control signals.

The controller of any preceding clause wherein the control signals further cause selectively manipulation of the laser beam of each laser diode based on the control signals.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A system for additively manufacturing a three-dimensional object, the system comprising:
a build platform;
an array of laser diodes, each laser diode of the array of laser diodes configured to direct a laser beam toward the build platform; and
a controller communicatively coupled to each laser diode of the array of laser diodes such that control signals are communicated from the controller to each laser diode individually.

2. The system of claim 1, wherein the array of laser diodes is arranged such that the laser diodes of the array are in a plurality of rows in a first direction and in a plurality of columns in a second direction perpendicular to the first direction, each laser diode spaced from each neighboring laser diode.

3. The system of claim 2, wherein neighboring rows of the plurality of rows are staggered in the first direction.

4. The system of claim 2, wherein neighboring columns of the plurality of columns are staggered in the second direction.

5. The system of claim 2, wherein the array of laser diodes is arranged in a plurality of layers in a third direction perpendicular to both of the first and second directions.

6. The system of claim 1, wherein the controller selectively manipulates the laser beam of each laser diode.

7. The system of claim 6, further comprising an optical element disposed between the build platform and the array of laser diodes, wherein the controller selectively manipulates the laser beam of each laser diode by utilizing the optical element.

8. The system of claim 6, further comprising an optical element disposed between the build platform and the array of laser diodes, wherein the optical element includes a plurality of optical elements, each of the plurality of optical elements is configured to manipulate the respective laser beam.

9. The system of claim 1, wherein the array of laser diodes is movable in a first direction or a second direction perpendicular to the first direction.

10. The system of claim 1, wherein each laser diode of the array of laser diodes is movable in a first direction or a second direction perpendicular to the first direction.

11. The system of claim 1, wherein the array of laser diodes is distributed in an area larger than a build surface of the build platform.

12. The system of claim 1, wherein the laser diodes are arranged in a layered two dimensional pattern.

13. The system of claim 12, wherein the laser diodes are arranged in a plurality of layers in a three dimensional pattern.

14. The system of claim 12, wherein the controller selectively manipulates the laser beam of each laser diode.

15. The system of claim 14, further comprising an optical element disposed between the build platform and the array of laser diodes, wherein the controller selectively manipulates the laser beam of each laser diode by utilizing the optical element.
